# EUROPEAN PATENT SPECIFICATION

(11) **EP 1 950 101 B1**
(45) Date of publication and mention of the grant of the patent: **13.02.2013**
(21) Application number: 07023930.6
(22) Date of filing: 11.12.2007
(51) Int. Cl.: B60R 21/09, B60T 7/06, G05G 1/323, G05G 1/32

(54) **Pedal unit for a motor vehicle**
Pedaleinheit für ein Kraftfahrzeug
Ensemble de pédale pour véhicule automobile

(30) Priority: 23.01.2007 IT TO20070037
(43) Date of publication of application: 30.07.2008
(73) Proprietor: Plastic Components and Modules Automotive S.p.A., 10095 Grugliasco (TO) (IT)
(72) Inventor: Cimminelli, Francesco, deceased (IT); Pistone, Davide, 10060 Roletto (Torino) (IT); Iacobone, Pasquale, 85025 Melfi (Potenza) (IT)
(74) Representative: Rondano, Davide

(56) References cited:
- EP-A1- 1 323 602
- EP-A1- 1 510 425
- EP-A1- 1 600 344
- FR-A1- 2 885 574

## Description

The present invention relates in general to pedals for controlling motor vehicles by a driver.

Usually, the pedals mounted on the pedal units installed on motor vehicles, have a rigid structure which, in the case of an impact of the motor vehicle, such as a frontal impact, and of the resulting deformation of parts of the body thereof, may move back towards the passenger compartment and impair the safety of the lower limbs of the driver.

In order to avoid this problem, pedal units have been proposed having a deformable structure which allows at least a pedal arm to freely rotate or to be released and falling down as a result of an impact of the motor vehicle involving the movement of a counter member connected with the body, in such a manner that the pedal arm cannot interfere with the lower limbs of the driver.

More particularly, the present invention refers to a pedal unit of a motor vehicle, such as defined in the preamble of appended claim 1.

A pedal unit of the type mentioned above is known from EP-A-1 600 344. This known pedal unit comprises a lever control member provided with a transverse sleeve in which a screw is inserted coaxially. The thread of the screw is engaged by a nut screw which is screwed in order to tighten the screw-nut screw unit against two opposite faces of the pedal arm for locking it in a position in which it is fast with the base element of the pedal unit. Owing to the presence of the screw-nut screw unit, it is particularly difficult and complex to get the optimal tightening force of the system which is able to assure the correct connection of the pedal arm with the base element of the unit for all the operative conditions. In particular, the structure of this known pedal unit, which is also relatively expensive to manufacture in view of its complexity, requires to carry out accurate setting operations before installing the pedal unit. However, the nut may unloose accidentally and release the pedal arm with respect to the base element of the unit, as a result of unavoidable vibrations to which the system is subject in the running of the motor vehicle.

Moreover, document EP1323602 discloses a pedal unit comprising a base element, mounted rotatably about an axis of oscillation, a pedal arm articulated to the base element about a first pin parallel to and spaced apart from the axis of oscillation which is adapted to control the rotation of the base element about the axis of oscillation.

The pedal unit further includes a controlling device, comprising a spring element and two levers, said levers being pivoted on two pins which are parallel and spaced apart from the axis of oscillation. One of said pins has an appendage adapted to interfere with a counter element of the motor vehicle as a result of a movement of the counter element caused by an impact of the motor vehicle.

Moreover, locking means of the pedal arm with respect to the base element comprise shaped formations respectively associated with one lever of the controlling device and with the pedal arm, said locking means being adapted to assume a first active configuration in which the pedal arm and the lever control member constitute a unitary member together with the base element, and a second inactive configuration in which the pedal arm may freely rotate with respect to the base element about said first pin due to the interference of the appendage with said counter element,

The shaped formations comprise a pair of corresponding surfaces, formed respectively on mutually facing portions of one lever of the controlling device and of an additional pin of the pedal arm, said surfaces being mutually engageable and disengageable.

With the aim of solving these drawbacks, the subject of the invention is a pedal unit having the claimed features.

By virtue of this idea of solution, the pedal unit of the invention has a structure which is simple, compact and extremely reliable in the use, which does not require setting operations before its installation on a motor vehicle.

According to a preferred feature of the invention, the arched surfaces, in the first active configuration of the locking means, have zones of mutual contact arranged on the side of the swinging axis, with respect to a plane on which the axes of the first pin and of the second pin lie. In this manner, the lever control member and the pedal arm make, together with the base element, a structure which reaches the locking condition in a manner similar to a toggle articulation, thereby the locking of the pedal arm with respect to the base element in the aforesaid active configuration of the locking means, turns out to be quite reliable.

Further characteristics of the invention will appear more clearly from the following detailed description, provided as a non-limitative example and referred to the appended drawings, in which:

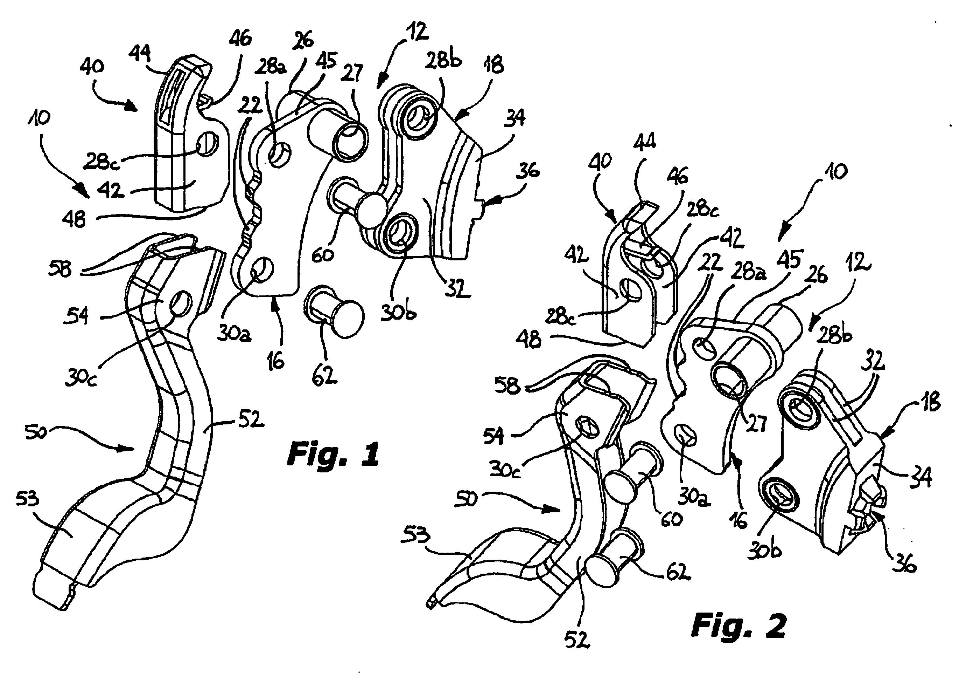

figure 1 is an exploded perspective view of the main elements of a pedal unit according to the invention,
figure 2 is another exploded perspective view of the unit of figure 1,
figure 3 is a perspective view of the pedal unit of figures 1 and 2, in the assembled configuration,
figure 4 is a front elevational view from arrow IV of figure 3,
figure 5 is a schematic enlarged and side elevational view of a detail indicated by arrow V in figure 4, and
figures 6, 7 and 8 are similar side elevational views which show, respectively, the operative condition of the pedal unit of the invention and, in succession, two steps of the release of the pedal arm thereof.

With reference to the figures, a pedal unit is indicated in its whole by reference numeral 10. The unit 10 is adapted to be associated to a pedal unit of a type known per se, in order that it can be used for controlling both a brake device or a clutch device of a motor vehicle.

The unit 10 includes a base element 12 which comprises essentially a shaped plate 16 and a fork body 18 coupled to each other.

The plate 16 is crossed, at an upper zone thereof, by a transverse sleeve 26 which delimitates a through hole 27 coaxial with an axis of oscillation A of the unit 10, and which is intended to receive a transverse pin (not shown in the figures) mounted on the pedal unit, for allowing articulation of the unit 10. A pair of parallel holes 28a and 30a, both separated to each other and from the hole 27, are formed in the plate 16. The front surface of the plate 16 has a pair of projections 22, lower and upper, respectively, whose purpose will be made more clear in the following.

The plate 16 is received in a cavity defined by the body 18 of the base element 12, which body 18 comprises a pair of parallel wings 32 extending from a back intermediate portion 34 thereof, so that the cross-section of the body 18 is U-shaped. A pair of holes 28b and 30b, corresponding to the holes 28a and 30a of the plate 16, are formed on each wing 32.

Whereas the plate 16 is usually made of metallic material, the body 18 may be conveniently made of plastic material, for example as a result of a molding step.

Preferably, the back portion 34 of the body 18 is provided with a coupling formation in order to allow to connect a member of a control device of the motor vehicle, such as a clutch or a brake device. For example, in the case of a pedal unit for controlling a brake device, the back portion 34 may be provided with a snap coupling formation 36 including a spherical hollow seat for inserting a correspondingly shaped terminal member of a servo-brake, and delimited outside by four elastically deformable radial tongues.

An pedal arm 50, separated from the snap coupling formation 36 of the body 18, comprises a leg 52 having a box structure with a U-shaped cross-section. The arm 50 has a control plate 53 at an end thereof, and an articulation portion 54, at the opposite end, for connection with the base element 12, inside of which a portion of the element 12 is received. In particular, two coaxial through holes 30c are formed at the articulation portion of the pedal arm 50, for inserting a first pin 62 crossing also the holes 30b of the two wings 32 of the body 18, and the hole 30a of the plate 16, in order to allow the pedal arm 50 to be rotatably mounted about the pin 62, with respect to the base element 12. In the case of a pedal unit for controlling the brake of a motor vehicle, the arm 50 will be usually of metallic material, whereas in the case of a pedal unit for controlling the clutch of a motor vehicle, the arm 50 could be made of plastic material.

A lever control member 40, having also a box structure with a U-shaped cross-section in order to allow to receive a portion of the element 12, is also articulated to the base element 12. In particular, the lever control member 40 comprises an upper appendage 44 and two sidewalls 42 in which coaxial through holes 28c are formed, which are crossed by a second pin 62, parallel to the pin 60. The pin 62 is also inserted in the holes 28b of the two wings 34 of the body 18 and in the hole 28a of the plate 16, in such a manner that the member 40 is rotatable about the pin 60, with respect to the base element 12.

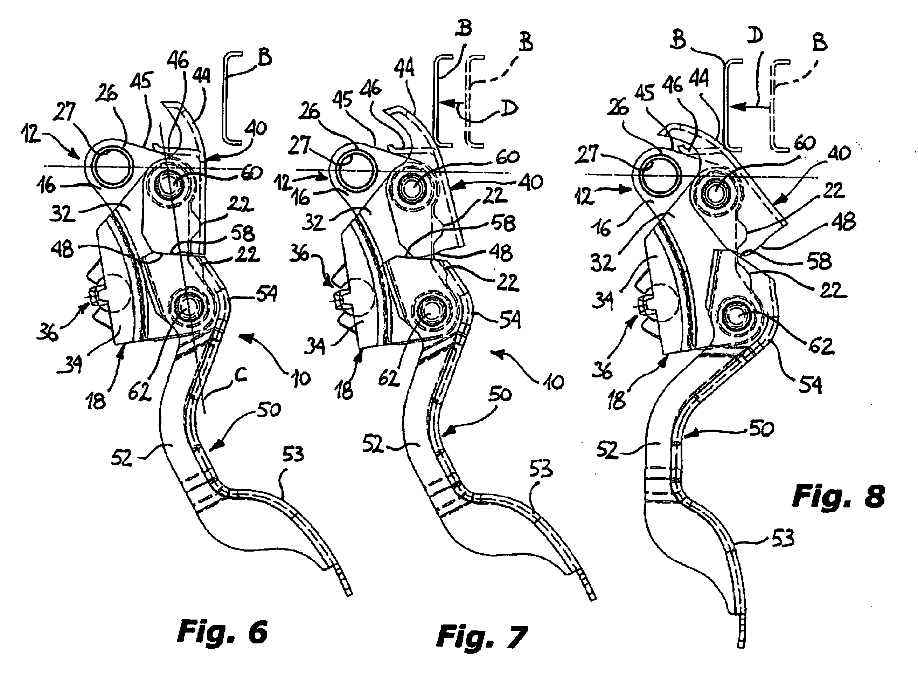

The appendage 44 of the member 40 is so shaped as to be able to interfere with a counter element B (figures 6 to 8) of the motor vehicle on which the unit 10 is mounted, for example a transverse beam extending below the dashboard of the motor vehicle, the element B being intended to undergo a movement towards the front portion of the motor vehicle as a result of an enough violent impact of the motor vehicle, particularly of a frontal impact.

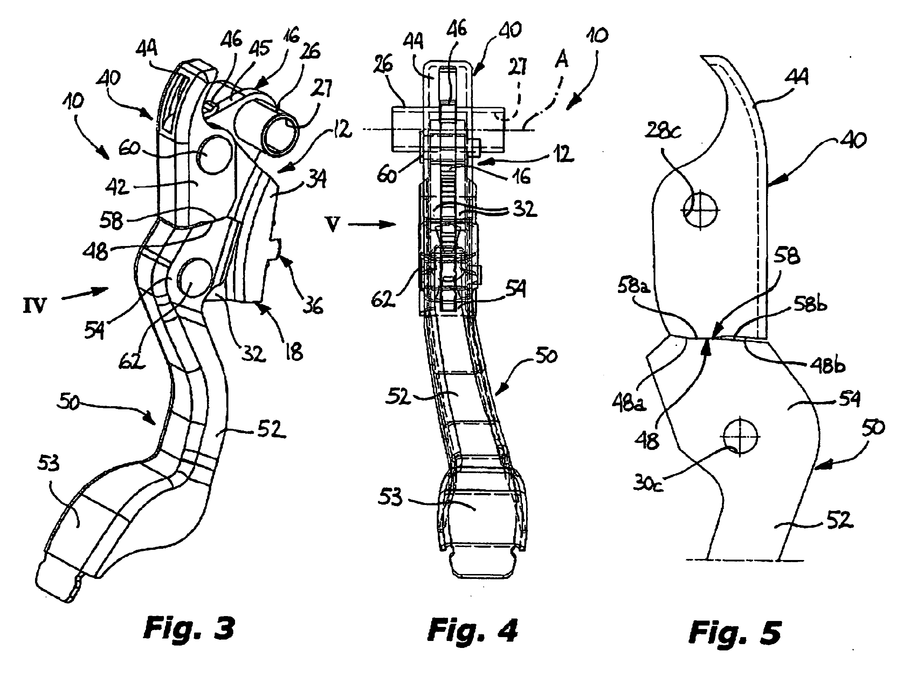

Means adapted to lock the pedal arm 50 with respect to the base element 12, during the normal operation of the motor vehicle, are associated with the pedal arm 50 and with the lever control member 40. These locking means comprise a pair of shaped formations 48 and 58, which include respective corresponding arched surfaces 48a and 58a, formed on mutually facing portions of the member 40 and the arm 50, adapted to slide one on the other. The shaped formations 48 and 58 may assume a first active configuration (figures 3 to 6) in which they are mutually engaged in such a manner that the arm 50 and the member 40 constitute a unitary element with the base element 12, so that the pedal unit 10 may rotate cumulatively about the axis of oscillation A in order to control the respective control device. In a second inactive configuration (figures 7 and 8) of the shaped formations 48 and 58, they are disengaged, in such a manner that the arm 50 is not connected with the base element 12 and may therefore rotate freely about the pin 62. The surfaces 48 and 58 have also respective rectilinear portions 48b and 58b (figure 5) which extend in the direction opposite to axis A of the unit 10.

Preferably, the two arched surfaces 48a and 58a of the formations 48 and 58 are constituted by arches of circle whose center coincides with the axis of the pin 60, their zone of mutual contact, in the aforesaid active configuration, being arranged on the side of the axis of oscillation A with respect to a plan C on which the axes of both the pins 60 and 62 lie.

Conveniently, an elastic element 46, preferably in the form of a flexible lamina and made integrally with the lever control member 40, extends from the base of the appendage 44 of the lever control member 40 towards the plate 16. The elastic element 46 is intended to engage slidably and with a pressure a top flat surface 45 of the base element 12, which extends slightly tilted starting from a zone above the hole 28a up to a zone above the sleeve 26, in order to hold the lever control member 40 in its position in which its shaped surface 48 is engaged with the shaped surface 58 of the arm 50. Preferably, the lamina 46 has a tapered the free, for example bent, in order to make easier the sliding thereof on the flat surface 45.

In the usual operation of the unit 10 (figure 6), the shaped surfaces 48 and 58 of the member 40 and of the arm 50 are mutually engaged, in such a manner that the member 40 and the arm 50 constitute a unitary structure together with the base element 12. In this configuration, in which the projections 22 of the plate 16 abut respectively against inner zones of the arm 50 and of the lever member 40, with the function of end-of-stroke resting elements, the unit 10 may rotate cumulatively about the axis of oscillation A as a result of a thrust applied by a foot of the motor vehicle driver on the control plate 53, so as to control the relevant control device.

As a result of a movement of the counter element B, shown by arrows D of figures 7 and 8, towards the front portion of the motor vehicle, owing to an enough substantial impact, the counter element B interferes with the appendage 44 and causes rotation of the member 40 about the pin 60 and therefore the disengagement of the shaped surfaces 48 and 58. In such a configuration, the arm 50 is free to rotate about the pin 62 in such a manner that the arm 50, which is made movable with respect to the base element 12, does not constitute an obstacle which may harm the integrity of the driver's lower limbs.

## Claims

1. Pedal unit for a motor vehicle, comprising:
- a base element (12) adapted to be mounted rotatably about an axis of oscillation (A) and to be connected with a control device of the motor vehicle through connection means (36),
- a pedal arm (50) articulated to the base element (12) about a first pin (62) parallel to and spaced from the axis of oscillation (A), and adapted to allow to control the rotation of the base element (12) about said axis of oscillation (A),
- a lever control member (40) articulated to the base element (12) about a second pin (60) parallel to and spaced from the axis of oscillation (A) and the first pin (62), which has an appendage (44) adapted to interfere with a counter element (B) of the motor vehicle as a result of a movement of the counter element (B) caused by an impact of the motor vehicle,
- locking means of the pedal arm (50) with respect to the base element (12), which comprise shaped formations (48, 58) respectively associated with the lever control member (40) and with the pedal arm (50), adapted to assume a first active configuration in which the pedal arm (50) and the lever control member (40) constitute a unitary member together with the base element (12), so that the pedal unit (10) may rotate cumulatively about the axis of oscillation (A) in order to control said control device, and a second inactive configuration in which the pedal arm (50) may freely rotate with respect to the base element (12) about said first pin (62) after a rotation of the lever control member (40) about the second pin (60) caused by the interference of the appendage (44) of the lever control member (40) with said counter element (B), wherein
said shaped formations comprise a pair of corresponding arched surfaces (48, 58) formed respectively on mutually facing portions of the lever control member (40) and of the pedal arm (50), and wherein said arched surfaces (48, 58) are mutually engageable and disengageable as a result of a relative sliding caused by the rotation of the lever control member (40) about said second pin (60).

2. Pedal unit according to claim 1, **characterized in that** the arched surfaces (48, 58), in said first active configuration of the locking means, have zones of mutual contact arranged on the side of the axis of oscillation (A) with respect to a plane (C) on which the axes of the first pin (62) and of the second pin (60) lie.

3. Pedal unit according to claim 1 or 2, **characterized in that** said first arched surface (48) consists of an arc of circle whose center coincides with the axis of said second pin (60).

4. Pedal unit according to any one of claims 1 to 3, **characterized in that** the pedal arm (50) is separated from the means (36) of connection with said control device of the motor vehicle.

5. Pedal unit according to any one of claims 1 to 4, **characterized in that** the base element (12) has a flat surface (45) adapted to be engaged slidably and with a pressure by an elastic element (46) extending from the lever control member (40), with the aim of holding the lever control member (40) in its position in which the locking means are in said first active configuration.

6. Pedal unit according to claim 5, **characterized in that** said elastic element consists of a flexible lamina (46) made integrally with the lever control member (40).

7. Pedal unit according to claim 6, **characterized in that** said flexible lamina (46) has a tapered free end in order to make easier the sliding thereof on said flat surface (45) of the base element (12).

8. Pedal unit according to any one of claims 1 to 7, **characterized in that** the base element (12) comprises a plate (16) crossed by a sleeve (26) coaxial with said axis of oscillation (A), and it is crossed by a pair of holes (28a, 30a) intended to receive the first pin (62) and the second pin (60), respectively.

9. Pedal unit according to claim 8, **characterized in that** said plate (16) has a pair of projections (22) respectively facing the pedal arm (50) and the lever control member (40), adapted to abut against the pedal arm (50) and the lever control member (40), in the active configuration of said locking means.

10. Pedal unit according to claim 8 or 9, **characterized in that** the base element (12) comprises a body (18) having a U-shaped cross-section, which comprises a pair of parallel wings (32) extending from a back intermediate portion (34) and between which said plate element (16) can be inserted, and **in that** the body (18) has respective holes (28b, 30b) on each of the parallel wings (32), intended to be engaged in pairs by the first pin (62) and by the second pin (60).

11. Pedal unit according to claim 10, **characterized in that** the back intermediate portion (34) of the body (18) of the base element (12) comprises a snap coupling formation (36) for allowing connection of said control device.

12. Pedal unit according to claim 10 or 11, **characterized in that** the lever control member (40) and the pedal arm (50) have a U-shaped cross-section, adapted to receive inside the body (18) of the base element (12).

13. Motor vehicle **characterized in that** it comprises at least a pedal unit (10) according to any one of claims 1 to 12.

## Patentansprüche

1. Pedaleinheit für ein Kraftfahrzeug, mit:
einem Basiselement (12), das angepasst ist, um eine Pendelachse (A) drehbar montiert und durch eine Verbindungseinrichtung (36) mit einer Steuervorrichtung des Kraftfahrzeugs verbunden zu werden,
einem Pedalarm (50), der am Basiselement (12) um einen ersten Stift (62) parallel und im Abstand zur Pendelachse (A) angelenkt ist und angepasst ist, die Steuerung der Drehung des Basiselements (12) um die Pendelachse (A) zu erlauben,
einem Hebelbetätigungselement (40), das am Basiselement (12) um einen zweiten Stift (60) parallel und im Abstand zur Pendelachse (A) und zum ersten Stift (62) angelenkt ist, das einen Fortsatz (44) besitzt, der angepasst ist, an ein Gegenelement (B) des Kraftfahrzeugs als Folge einer durch einen Aufprall des Kraftfahrzeugs verursachten Bewegung des Gegenelements (B) zu stoßen,
Sperreinrichtungen des Pedalarms (50) in Bezug auf das Basiselement (12), die mit dem Hebelbetätigungselement (40) bzw. mit dem Pedalarm (50) verbundene geformte Ausbildungen (48, 58) aufweisen, die angepasst sind, eine erste, aktive Konfiguration einzunehmen, in welcher der Pedalarm (50) und das Hebelbetätigungselement (40) zusammen mit dem Basiselement (12) ein zusammenhängendes Element darstellen, sodass die Pedaleinheit (10) als Ganze um die Pendelachse (A) drehen kann, um die Betätigungsvorrichtung zu betätigen, und eine zweite, inaktive Konfiguration, in welcher der Pedalarm (50) nach einer Drehung des Hebelbetätigungselements (40) um den zweiten Stift (60), die durch das Stoßen des Fortsatzes (44) des Hebelbetätigungselements (40) an das Gegenelement (B) verursacht wird, in Bezug auf das Basiselement (12) um den ersten Stift (62) frei drehen kann,
wobei die geformten Ausbildungen ein Paar entsprechender, gebogener Oberflächen (48, 58), die auf einander zugewandten Abschnitten des Hebelbetätigungselements (40) bzw. des Pedalarms (50) gebildet werden, aufweisen, und wobei die gebogenen Oberflächen (48, 58) als Folge einer relativen Gleitbewegung, die durch die Drehung des Hebelbetätigungselements (40) um den zweiten Stift (60) verursacht wird, ineinander einrasten und voneinander getrennt werden können.

2. Pedaleinheit nach Anspruch 1, **dadurch gekennzeichnet, dass** in der ersten, aktiven Konfiguration der Sperreinrichtungen die gebogenen Oberflächen (48, 58) Zonen einer gegenseitigen Berührung besitzen, die auf der Seite der Pendelachse (A) in Bezug auf eine Ebene (C), auf der die Achsen des ersten Stifts (62) und des zweiten Stifts (60) liegen, angeordnet sind.

3. Pedaleinheit nach Anspruch 1 oder 2, **dadurch gekennzeichnet, dass** die erste gebogene Oberfläche (48) aus einem Kreisbogen besteht, dessen Mittelpunkt mit der Achse des zweiten Stifts (60) zusammenfällt.

4. Pedaleinheit nach einem der Ansprüche 1 bis 3, **dadurch gekennzeichnet, dass** der Pedalarm (50) von der Einrichtung (36) zum Verbinden mit der Betätigungsvorrichtung des Kraftfahrzeugs getrennt ist.

5. Pedaleinheit nach einem der Ansprüche 1 bis 4, **dadurch gekennzeichnet, dass** das Basiselement (12) eine flache Oberfläche (45) hat, die angepasst ist, gleitfähig und unter einem Druck durch ein vom Hebelbetätigungselement (40) aus verlaufendes, elastisches Element (46) ergriffen zu werden mit dem Ziel, das Hebelbetätigungselement (40) in seiner Position zu halten, in der die Sperreinrichtungen sich in der ersten, aktiven Konfiguration befinden.

6. Pedaleinheit nach Anspruch 5, **dadurch gekennzeichnet, dass** das elastische Element aus einem flexiblen Blatt (46), das in einem Stück mit dem Hebelbetätigungselement (40) hergestellt ist, besteht.

7. Pedaleinheit nach Anspruch 6, **dadurch gekennzeichnet, dass** das flexible Blatt (46) ein sich verjüngendes, freies Ende besitzt, um sein Gleiten auf der flachen Oberfläche (45) des Basiselements (12) zu erleichtern.

8. Pedaleinheit nach einem der Ansprüche 1 bis 7, **dadurch gekennzeichnet, dass** das Basiselement (12) eine Platte (16), die von einer mit der Pendelachse (A) koaxialen Büchse (26) gekreuzt wird, aufweist und es von einem Paar Löcher (28a, 30a), die den ersten Stift (62) bzw. den zweiten Stift (60) aufnehmen sollen, gekreuzt wird.

9. Pedaleinheit nach Anspruch 8, **dadurch gekennzeichnet, dass** die Platte (16) ein Paar dem Pedalarm (50) bzw. dem Hebelbetätigungselement (40) zugewandte Vorsprünge (22) besitzt, die angepasst sind, in der aktiven Konfiguration der Sperreinrichtungen an den Pedalarm (50) und das Hebelbetätigungselement (40) anzuliegen.

10. Pedaleinheit nach Anspruch 8 oder 9, **dadurch gekennzeichnet, dass** das Basiselement (12) einen Körper (18) mit einem U-förmigen Querschnitt aufweist, der ein Paar paralleler Flügel (32) aufweist, die sich von einem hinteren Zwischenabschnitt (34) erstrecken und zwischen die das Plattenelement (16) eingesetzt werden kann, und dadurch, dass der Körper (18) an jedem der parallelen Flügel (32) entsprechende Löcher (28a, 30a) besitzt, die in Paaren vom ersten Stift (62) und vom zweiten Stift (60) ergriffen werden sollen.

11. Pedaleinheit nach Anspruch 10, **dadurch gekennzeichnet, dass** der hintere Zwischenabschnitt (34) des Körpers (18) des Basiselements (12) eine Schnappkupplungsausbildung (36) besitzt, um eine Verbindung der Betätigungsvorrichtung zu erlauben.

12. Pedaleinheit nach Anspruch 10 oder 11, **dadurch gekennzeichnet, dass** das Hebelbetätigungselement (40) und der Pedalarm (50) einen U-förmigen Querschnitt haben, der angepasst ist, darin den Körper (18) des Basiselements (12) aufzunehmen.

13. Kraftfahrzeug, **dadurch gekennzeichnet, dass** es mindestens eine Pedaleinheit (10) nach einem der Ansprüche 1 bis 12 aufweist.

## Revendications

1. Ensemble de pédale pour véhicule automobile, comprenant:
- un élément de base (12) adapté pour être monté avec possibilité de rotation autour d'un axe d'oscillation (A) et à être connecté au dispositif de commande du véhicule à moteur par l'intermédiaire de moyens de connexion (36),
- un bras de pédale (50) articulé avec l'élément de base (12) autour d'une première cheville (62) parallèle à et espacée de l'axe d'oscillation (A), et adapté pour permettre la commande de la rotation de l'élément de base (12) autour dudit axe d'oscillation (A),
- un membre de commande à levier (40) articulé avec l'élément de base (12) autour d'une deuxième cheville (60) parallèle à et espacé de l'axe d'oscillation (A) et de la première cheville (62), qui a un appendice (44) adapté pour interférer avec un contre-élément (B) du véhicule à moteur à la suite d'un mouvement du contre-élément (B) provoqué par un choc du véhicule à moteur,
- des moyens de verrouillage du bras de pédale (50) par rapport à l'élément de base (12), qui comprennent des formations profilées (48, 58) associées respectivement au membre de commande à levier (40) et au bras de pédale (50), adaptés pour prendre une première configuration active dans laquelle le bras de pédale (50) et le membre de commande à levier (40) constituent un membre unitaire conjointement avec l'élément de base (12), de telle manière que l'ensemble de pédale (10) peut tourner cumulativement autour de l'axe d'oscillation (A) afin de commander ledit dispositif de commande, et une deuxième configuration inactive dans laquelle le bras de pédale (50) peut tourner librement par rapport à l'élément de base (12) autour de ladite première cheville (62) après une rotation du membre de commande à levier (40) autour de la deuxième cheville (60), provoquée par l'interférence de l'appendice (44) du membre de commande à levier (40) avec ledit contre-élément (B),
tandis que lesdites formations profilées comprennent une paire de surfaces arquées correspondantes (48, 58) formées respectivement sur des portions mutuellement en regard du membre de commande à levier (40) et du bras de pédale (50), et
tandis que lesdites surfaces arquées (48, 58) sont aptes à être mutuellement engagées et désengagées à la suite d'un glissement relatif provoqué par la rotation du membre de commande à levier (40) autour de ladite deuxième cheville (60).

2. Ensemble de pédale selon la revendication 1, **caractérisé en ce que** les surfaces arquées (48, 58), dans ladite première configuration active des moyens de verrouillage, ont des zones de contact mutuel agencées sur le côté de l'axe d'oscillation (A) par rapport à un plan (C) sur lequel les axes de la première cheville (62) et de la deuxième cheville (60) reposent.

3. Ensemble de pédale selon la revendication 1 ou 2, **caractérisé en ce que** ladite première surface arquée (48) consiste en un arc de cercle dont le centre coïncide avec l'axe de ladite deuxième cheville (60).

4. Ensemble de pédale selon l'une quelconque des revendications 1 à 3, **caractérisé en ce que** le bras de pédale (50) est séparé des moyens (36) de connexion avec ledit dispositif de commande du véhicule à moteur.

5. Ensemble de pédale selon l'une quelconque des revendications 1 à 4, **caractérisé en ce que** l'élément de base (12) a une surface plane (45) adaptée pour être engagée, en coulissement et avec une pression exercée par un élément élastique (46) s'étendant à partir du membre de commande à levier (40), avec pour objectif de maintenir le membre de commande à levier (40) dans sa position dans laquelle les moyens de verrouillage sont dans ladite première configuration active.

6. Ensemble de pédale selon la revendication 5, **caractérisé en ce que** ledit élément élastique consiste en une lame flexible (46) faisant partie intégrante du membre de commande à levier (40).

7. Ensemble de pédale selon la revendication 6, **caractérisé en ce que** ladite lame flexible (46) a une extrémité libre effilée pour faciliter son glissement sur ladite surface plane (45) de l'élément de base (12).

8. Ensemble de pédale selon l'une quelconque des revendications 1 à 7, **caractérisé en ce que** l'élément de base (12) comprend une plaque (16) traversée par un manchon (26) coaxial avec ledit axe d'oscillation (A), et est traversé par une paire de trous (28a, 30a) destinés à recevoir la première cheville (62) et la deuxième cheville (60), respectivement.

9. Ensemble de pédale selon la revendication 8, **caractérisé en ce que** ladite plaque (16) a une paire de projections (22) faisant face respectivement au bras de pédale (50) et au membre de commande à levier (40), adaptées pour buter contre le bras de pédale (50) et le membre de commande à levier (40), dans la configuration active desdits moyens de verrouillage.

10. Ensemble de pédale selon la revendications 8 ou 9, **caractérisé en ce que** l'élément de base (12) comprend un corps (18) ayant une section transversale en forme de U, qui comprend une paire d'ailes parallèles (32) s'étendant à partir d'une portion arrière intermédiaire (34) et entre lesquelles ledit élément en plaque (16) peut être inséré, et **en ce que** le corps (18) a des trous respectifs (28b, 30b) sur chacune des ailes parallèles (32), destinés à être accouplés par paires avec la première cheville (62) et avec la deuxième cheville (60).

11. Ensemble de pédale selon la revendication 10, **caractérisé en ce que** la portion arrière intermédiaire (34) du corps (18) de l'élément de base (12) comprend une formation de couplage à encliquetage (36) pour permettre la connexion dudit dispositif de commande.

12. Ensemble de pédale selon la revendication 10 ou 11, **caractérisé en ce que** le membre de commande à levier (40) et le bras de pédale (50) ont une section transversale en forme de U, adaptée pour recevoir à l'intérieur le corps (18) de l'élément de base (12).

13. Véhicule à moteur **caractérisé en ce qu'**il comprend au moins un ensemble de pédale (10) selon l'une quelconque des revendications 1 à 12.
